# EUROPEAN PATENT APPLICATION

(11) **EP 2 816 140 A1**
(43) Date of publication of application: **24.12.2014**
(21) Application number: 14170278.7
(22) Date of filing: 28.05.2014
(51) Int. Cl.: C25B 1/04, C25B 15/08

(54) **Liquid - gas cycling system for electrolytic tank of health gas generator**

(30) Priority: 19.06.2013 CN 201310244411
(71) Applicant: Lin, Hsin-Yung, Jiading Disrict, Shanghai 201-801 (CN)
(72) Inventor: Lin, Hsin-Yung, Jiading Disrict, Shanghai 201-801 (CN)
(74) Representative: TBK

(57) **Abstract**

A liquid/gas cycling system utilized in water electrolysis to generate a gas mixture of hydrogen and oxygen is disclosed. The liquid/gas cycling system comprises an electrolytic tank having a first liquid inlet and a first gas outlet which is mounted on the upper portion of the electrolytic tank, wherein the electrolytic tank is adapted to contain water (for example, electrolytic water) and generate the gas mixture through water electrolysis. A first tank adapted to contain water has a gas inlet, a first liquid outlet, a second gas outlet and a pressure relief valve. The gas inlet is mounted on the bottom portion of the first tank and connected to the first gas outlet. The first liquid outlet is connected to the first liquid inlet. The second gas outlet and the pressure relief valve are mounted on the upper portion of the first tank. When the pressure of the gas mixture in the first tank exceeds a predetermined value, the pressure relief valve will release the gas mixture.

## Description

### BACKGROUND OF THE INVENTION

### 1. Field of the invention

The present invention relates to a liquid/gas cycling system, more particularly, to a liquid/gas cycling system for use with an electrolytic tank of a health gas generator that can produce a gas mixture of hydrogen and oxygen.

### 2. Description of the prior art

From ancient times till now, humanity has always made preserving life a high priority. Many developments in medical technology are used for diseases and increasing life expectancy. In the past, most medical treatment was passive. In other words, diseases are treated only when people fall ill, by performing surgical operation, medication, chemotherapy, radiation treatment and so on. But recently, many medical experts are focusing on disease prevention, such as studying on the health effects of food, and screening for genetic disorders to actively reduce the risk of falling ill. Furthermore, to increase life expectancy, many anti-aging technologies have been developed, including skin care products and antioxidant food/medicine.

Studies have found that there is an instable oxygen species (O+), also known as free radicals, in the human body. The free radicals usually generated due to diseases, diet, environment and one's lifestyle, but can be excreted in the form of water by reacting with the inhaled hydrogen. With this method, the amount of free radicals in the human body can be reduced, thereby restoring the body condition from an acidic state to an alkaline state, achieving an anti-oxidation, anti-aging and beauty health effect, and even eliminating chronic diseases. Furthermore, there are also clinical experiments showing that patients who need to inhale a high concentration of oxygen for an extended period of time would experience lung damage and the lung damage can be ameliorated by inhaling hydrogen. In summary, the hydrogencontaining gas is regarded as a type of health gas that can be obtained by electrolysis of water.

### SUMMARY OF THE INVENTION

One objective of the present invention is to provide a liquid/gas cycling system for use with an electrolytic tank of a health gas generator that can produce a gas mxiture of hydrogen and oxygen. The liquid/gas cycling system is adapted for controlling the amounts of hydrogen and oxygen in the gas generator to prevent hydrogen explosion.

Another objective of the present invention is to provide a liquid/gas cycling system for use with an electrolytic tank of a health gas generator that can produce a gas mixture of hydrogen and oxygen. The liquid/gas cycling system is adapted for reducing the temperature of the electrolytic tank to prevent hydrogen explosion.

Another objective of the present invention is to provide a liquid/gas cycling system for use with an electrolytic tank of a health gas generator that can produce a gas mixture of hydrogen and oxygen. The liquid/gas cycling system has an automatic replenishment function.

According to some embodiments of the present invention, a liquid/gas cycling system applied to the electrolysis of water is provided, which comprises an electrolytic tank having a first liquid inlet and a first gas outlet. The first gas outlet is mounted on the upper portion of the electrolytic tank. The electrolytic tank is used for containing water, such as electrolytic water, and generating the gas mixture of hydrogen and oxygen through electrolysis of water. The liquid/gas cycling system further comprises a first tank for containing pure water. The first tank comprises a gas inlet, a first liquid outlet, a second gas outlet and a pressure relief valve. The gas inlet is mounted on the lower portion of the first tank and coupled with the first gas outlet of the electrolytic tank. The first liquid outlet is coupled with the first liquid inlet. The second gas outlet and the pressure relief valve are mounted on the upper portion of the first tank. When the pressure of the gas mixture in the first tank exceeds a predetermined value, the pressure relief valve can release the excess pressure.

According to another embodiment of the present invention, the first tank further comprises a first level detector and a first water inlet. The first level detector is used for detecting the level of pure water in the first tank. The first water inlet is used for supplying pure water into the first tank when the level of pure water is under a predetermined value.

According to another embodiment of the present invention, the liquid/gas cycling system further comprises a second tank. The second tank comprises a second liquid outlet and is used for containing pure water. The first tank further comprises a second liquid inlet coupled with the second liquid outlet. Furthermore, there is a liquid valve coupled between the second liquid inlet and the second liquid outlet. The first tank comprises a first level detector for detecting the level of pure water in the first tank. When the first level detector detects that the level of pure water drops below a predetermined value, the liquid valve will be opened, so that the pure water in the second tank can flow into the first tank for replenishment, meanwhile, the pressure relief valve will also be opened to release the pressure.

According to another embodiment of the present invention, the second tank further comprises a second level detector and a second water inlet. The second level detector is used for detecting the level of pure water in the second tank. The second water inlet is adapted for supplying pure water into the second tank when the level of pure water is under a predetermined value.

As the gas mixture of hydrogen and oxygen from the electrolytic tank is transferred to the first tank through the gas inlet mounted on the bottom portion of the first tank, allowing the gas mixture to pass through the pure water in the first tank, thus reducing the temperature of the gas mixture to prevent hydrogen explosion. Another means to prevent hydrogen explosion is to keep the storage amount of the gas mixture at a safe value. In the present invention, the first level detector, the pressure relief valve and the second tank make sure that the gas mixture is at a safe value. Furthermore, the first liquid inlet and the first gas outlet of the electrolytic tank, as well as the gas inlet and the first liquid outlet of the first tank, together realize the replenishment of pure water into the first tank As a result, the gas mixture in the electrolytic tank can automatically be transferred to the first tank, thus achieving the goal of cycling liquid/gas.

Many other advantages and features of the present invention will be further understood by the following detailed description and the appended drawings.

### BRIEF DESCRIPTION OF THE APPENDED DRAWINGS

FIG. 1 is a schematic diagram illustrating a three-tier liquid/gas cycling system according to some embodiments of the invention, wherein the electrolytic tank is a chip electrolyzer;
FIG. 2 is a schematic diagram illustrating a three-tier liquid/gas cycling system according to some embodiments of the invention, wherein the electrolytic tank is a bimodal electrolyzer;
FIG. 3 is a schematic diagram illustrating a two-tier liquid/gas cycling system according to some embodiments of the invention, wherein the electrolytic tank is a chip electrolyzer; and
FIG. 4 is a schematic diagram illustrating a two-tier liquid/gas cycling system according to some embodiments of the invention, wherein the electrolytic tank is a bimodal electrolyzer.

To facilitate understanding, identical reference numerals have been used, where it is possible to designate identical elements that are common to the figures.

### DETAILED DESCRIPTION OF THE INVENTION

In order to allow the advantages, spirit and features of the present invention to be more easily and clearly understood, the embodiments and appended drawings thereof are discussed in the following. However, the present invention is not limited to the embodiments and appended drawings.

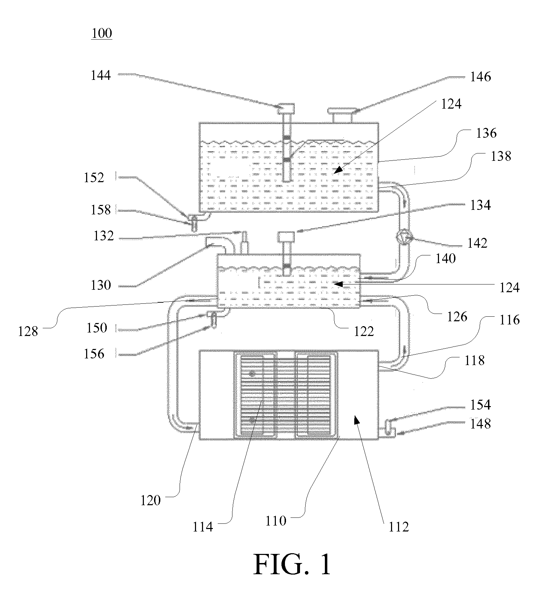

Please refer to FIG. 1. FIG. 1 is a schematic diagram illustrating a three-tier liquid/gas cycling system according to some embodiments of the invention, wherein the electrolytic tank is a chip electrolyzer. According to some embodiments of the invention, the liquid/gas cycling system 100 comprises an electrolytic tank 110 used for containing water 112 (such as electrolytic water). The main ingredient of the water 112 is either pure water or water, with a small amount of electrolytes added such as sodium hydroxide, calcium carbonate, sodium chloride if necessary. In this embodiment, the electrolytic tank 110 is a chip electrolyzer having a plurality of sheet electrodes 114. When the electrolytic tank 110 is powered, the water 112 is electrolyzed to generate a gas mixture 116 of hydrogen and oxygen. Because the gas mixture 116 of hydrogen and oxygen is separated out to the upper portion of the electrolytic tank, there is a first gas outlet 118 on the upper portion of the electrolytic tank to withdraw the gas mixture 116. Furthermore, there is a first liquid inlet 120 on the lower portion of the electrolytic tank to supply pure water to the electrolytic tank 110 as the water 112 to be consumed by the electrolysis of water.

A first tank 122 is used for containing pure water 124 and supplying the pure water to the electrolytic tank 110. The first tank 122 comprises a gas inlet 126 which is connected to the first gas outlet 118 via a line. The gas mixture 116 from the electrolytic tank 110 can be introduced into the water 124 in the first tank 122 through the gas inlet 126. At this point, only a very small portion of the gas mixture 116 will be dissolved in pure water 124, as most of the gas mixture 116 can pass through the pure water 124 to the upper portion of the first tank 122. In addition, during the process of the gas mixture 116 passing through the pure water 124, the pure water 124 can absorb most of the heat and reduce the temperature of the gas mixture 116 to about room temperature (25 °C) due to high specific heat. In this way, the possibility of hydrogen explosion is reduced, thus enhancing the system security. In one embodiment, the gas inlet 126 is mounted on the outer wall of the lower portion of the first tank 122, as shown in FIG. 1, as long as the location of the gas inlet 126 is substantially lower than the normal water level of the first tank 122. Meanwhile, a small amount of unwanted electrolytic gases, such as chlorine, can be dissolved in pure water 124, thus making the pure water 124 a filter. The first tank 122 further comprises a first liquid outlet 128 which is mounted on the lower portion of the first tank 122. The first liquid outlet 128 is connected to the first liquid inlet 120 via a line to export the pure water 124 in the first tank 122 into the electrolytic tank 110 for replenishment. Preferably, the first tank 122 is mounted at a position slightly higher than where the electrolytic tank 110 locates (as shown in FIG. 1, either the bottom of the first tank 122 is higher than the top of the electrolytic tank 110, or the bottom of the first tank 122 is higher than the bottom of the electrolytic tank 110, such as the bottom of the first tank 122 being high than lower fourth of the electrolytic tank 110), so that the electrolytic tank 110 can be automatically replenished due to the siphon principle or the gravity principle, with no need for additional pressurization equipment. Furthermore, the pressure generated due to introducing the gas mixture 116 into the first tank 122 would also urge the pure water 124 in the first tank 122 to flow into the electrolytic tank 110 for replenishment.

After being cooled and filtered by the pure water 124, the gas mixture 116 is stored in the upper portion of the first tank 122, and exported from a second gas outlet 130 for being inhaled by a user. At this point, the flow rate of the gas mixture 116 in the second gas outlet 130 is between 0.1L/min and 2L/min. A pressure relief valve 132 is mounted on the upper portion of the first tank 122. When the pressure of the gas mixture 116 in the first tank 122 exceeds a predetermined value, the pressure relief valve 132 will release the gas mixture 116 to prevent hydrogen explosion. That is to say, the pressure relief valve 132 can selectively release the gas mixture 116 in the first tank 122. For example, if the second gas outlet 130 is malfuntional , such as being blocked and so forth, the pressure of the first tank 122 will rise as the gas mixture 116 from the electrolytic tank 110 is continuously imported into the first tank 122 , and the pressure relief valve 132 will release the gas mixture 116 in the first tank 122 to prevent an hydrogen explosion. In one embodiment, the pressure relief valve 132 is set to open to release the gas mixture 116 at an atmospheric pressure (1Pa). The first tank 122 further comprises a first level detector 134 for detecting the level of pure water in the first tank 122, with the mode of action of the first level detector 134 being described in detail below.

The liquid/gas cycling system 100 further comprises a second tank 136 for containing pure water 124. The second tank 136 comprises a second liquid outlet 138 which is coupled to a second liquid inlet 140 of the first tank 122 through a line. In one embodiment, the second liquid outlet 138 is mounted on the lower portion of the second tank 136, and the second liquid inlet 140 is mounted on the upper portion of the first tank 122. There is still a liquid valve 142 coupled between the second liquid inlet 140 and the second liquid outlet 138. When the first level detector 134 detects that the level of the pure water 124 in the first tank 122 has dropped below a predetermined value, the liquid valve 142 can be opened, so that the pure water 124 in the second tank 136 can flow into the first tank 122 for replenishment. That is to say, the first level detector 134 can selectively open the liquid valve 142. As the first tank 122 continuously supplies the electrolytic tank 110 with pure water 124, the amounts of the gas mixture 116 produced and stored are increased, and the level of the pure water 124 in the first tank 122 drops. An hydrogen explosion would tend to occur if the amount of the gas mixture 116 is too high. Therefore, with the first level detector 134, the amount of the gas mixture 116 in the first tank 122 can be kept at a safe value. The release of the gas mixture 116 and the replenishment of pure water 124 are useful for controlling the pressure and storage of the gas mixture 116 in the first tank 122, thereby preventing hydrogen explosion.

In another embodiment, when the first level detector 134 detects that the level of the pure water 124 drops below a predetermined value, the liquid valve 142 can be opened, so that the pure water 124 in the second tank 136 can flow into the first tank 122 for replenishment. Meanwhile, the pressure relief valve 132 can also be opened to release the gas mixture 116. In other words, the first level detector 134 can selectively open the pressure relief valve 132, where the liquid valve 142 and the pressure relief valve 132 are turned on simultaneously. In another preferred embodiment, the second tank 136 is slightly higher than the first tank 122 (as shown in FIG. 1, either the bottom of the second tank 136 is higher than the top of the first tank 122, or the bottom of the second tank 136 is higher than the bottom of the first tank 122, such as the bottom of the second tank 136 being high than lower fourth of the first tank 122), so that when the liquid valve 142 is opened, the first tank 122 can automatically be replenished due to the siphon principle or the gravity principle, with no need for additional pressurization equipment.

The second tank 136 also comprises a second level detector 144 and a second water inlet 146. The second level detector 144 is used for detecting the level of water 124 (or electrolytic water) in the second tank 136. When the second level detector 144 detects that the level of water 124 (or electrolytic water) drops below a predetermined value, a warning light on the second level detector 144 will inform the user to replenish the pure water 124 through the second water inlet 146. At this point, the power of the electrolytic tank can be turned off to allow the user to replenish the pure water 124 into the second tank 136. In addition, the second level detector 144 of the second tank 136 can also be used to detect whether the level of the pure water 124 is too high. If the level is too high, a warning light on the second level detector 144 will inform the user to stop replenishing pure water 124.

In addition, to facilitate cleaning and maintenance, the electrolytic tank 110, the first tank 122 and the second tank 136 are provided with a first drain outlet 148, a second drain outlet 150 and a third drain outlet 152, respectively. The first drain outlet 148, the second drain outlet 150 and the third drain outlet 152 are controlled by a first drain valve 154, a second drain valve 156 and a third drain valve 158, respectively. The first drain valve 154, the second drain valve 156 and the third drain valve 158 can drain water from the electrolytic tank 110, the first tank 122 and the second tank 136, thereby allowing users to perform maintenance or repair.

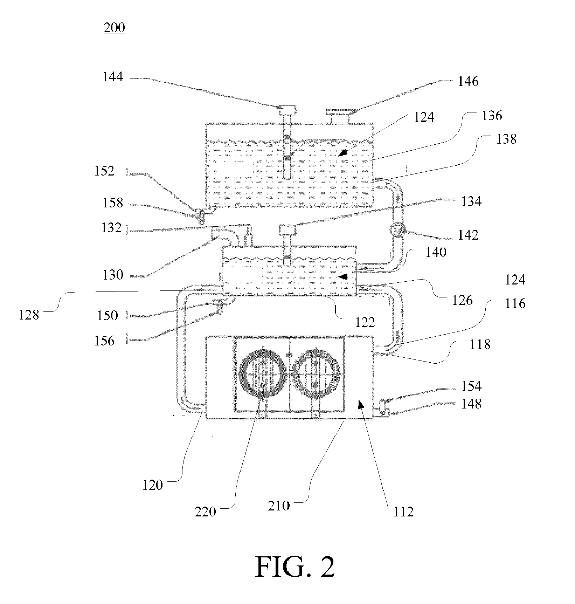

Please refer to FIG. 2. FIG. 2 is a schematic diagram illustrating a three-tier liquid/gas cycling system according to some embodiments of the invention, wherein the electrolytic tank is a bimodal electrolyzer. The only difference between the liquid/gas cycling system 200 in FIG. 2 and the liquid/gas cycling system 100 in FIG. 1 is that the electrolytic tank 210 is a bimodal electrolyzer having cylindrical electrodes 220. The remaining components, configuration and operation mode are the same as in FIG. 1 and will not be discussed here. Importantly, in some embodiments, the pressure relief valve 132 and the liquid valve 142 are controlled by a simple control circuit or computer system, and the pressure relief valve 132 and the liquid valve 142 are solenoid valves.

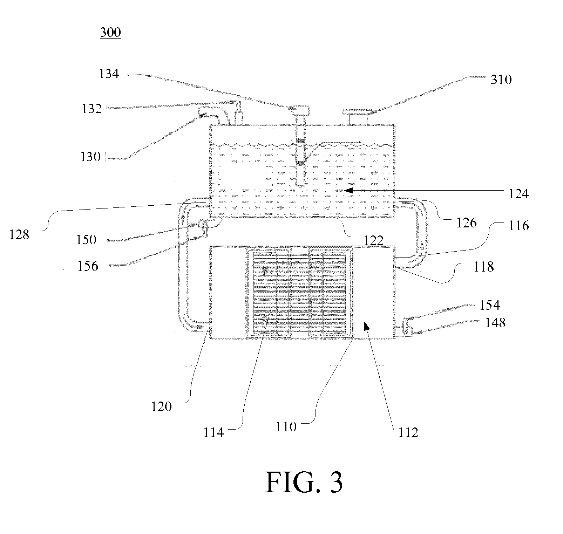

Please refer to FIG. 3. FIG. 3 is a schematic diagram illustrating a two-tier liquid/gas cycling system according to some embodiments of the invention, wherein the electrolytic tank is a chip electrolyzer. In some embodiments of the present invention, the three-tier liquid/gas cycling system shown in FIG. 1 and FIG. 2 can be simplified into a two-tier liquid/gas cycling system. As shown in FIG. 3, the liquid/gas cycling system 300 does not have the second tank present in FIG. 1, but instead has a first water inlet 310 on the first tank 122. When the first level detector 134 detects that the level of pure water 124 in the first tank 122 has droped below a predetermined value, a warning light on the first level detector 134 will inform the user to replenish pure water 124 through the first water inlet 310.

The liquid/gas circulation between the electrolytic tank 110 and the first tank 122 is the same as in FIG. 1, please refer to the description of FIG. 1 for information on the remaining components, configuration and operation. Furthermore, the second tank in FIG. 1 and FIG. 2 and the first tank in FIG. 3 are provided with warning devices, such as whistles, buzzers, warning lights or alert messages, to remind users to replenish or stop replenishing pure water. As shown in FIG. 3, the first level detector 134 can be used to detect whether the level of the pure water 124 is too low or too high. When the level of the pure water 124 is too high, a warning light on the first level detector 134 will inform the user to stop replenishing pure water 124; when the level of the pure water 124 is too low, a warning light on the first level detector 134 will inform the user to replenish pure water 124 through the first water inlet 310. At this point, the power of the electrolytic tank can be shut off to wait for the user to finish replenishing the pure water 124.

According to the aforesaid, the pressure relief valve 132 can adjust the amount of the gas mixture 116 stored in the upper portion of the first tank 122. When the pressure of the gas mixture 116 in the first tank 122 exceeds a predetermined value (such as 1Pa), the pressure relief valve 132 can release the gas mixture 116 to prevent hydrogen explosion. And when the first level detector 134 detects that the level of the pure water 124 in the first tank 122 drops below a predetermined value, the pressure relief valve 132 can also be opened to release the gas mixture 116, thereby enhancing the system security.

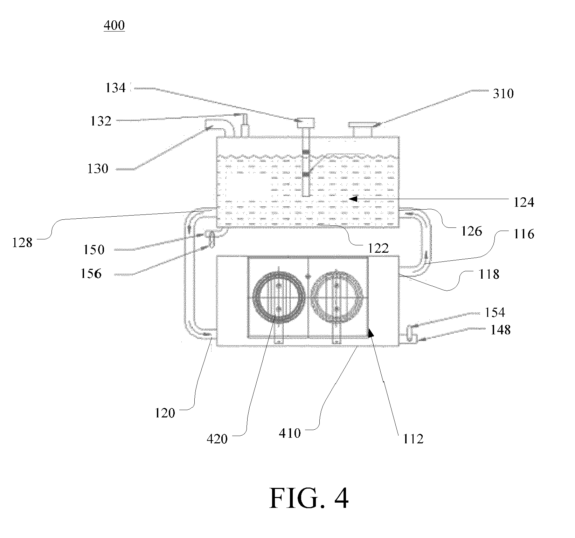

Please refer to FIG. 4. FIG. 4 is a schematic diagram illustrating a two-tier liquid/gas cycling system according to some embodiments of the invention, wherein the electrolytic tank is a bimodal electrolyzer. The only difference between the liquid/gas cycling system 400 in FIG. 4 and the liquid/gas cycling system 300 in FIG. 3 is that the electrolytic tank 410 is a bimodal electrolyzer having cylindrical electrodes 420. The remaining components, configuration and operation are the same as in FIG. 3 and will not be discussed here.

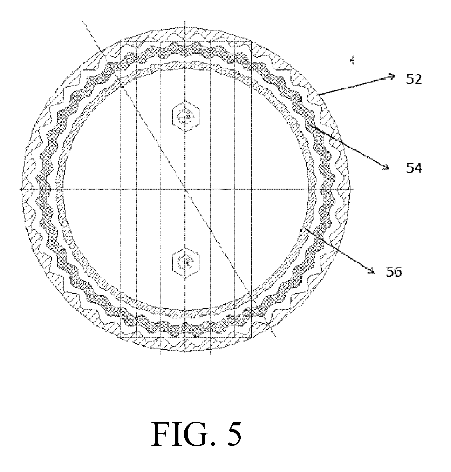

In the electrolytic tank, hydrogen is formed on the cathode and oxygen is formed on the anode. In one embodiment, the polarity of the electrodes can be alternated, for example, at a point in time, one electrode (such as the first electrode) is the cathode and another electrode (such as the second electrode) is the anode, but after a predetermined time, the first electrode changes into the anode and the second electrode changes into the cathode. In other words, the polarity of the first electrode and the second electrode can be interchangeable. In another embodiment, the bimodal electrolyzer comprises an outer cylinder 52, a middle cylinder 54 and an inner cylinder 56, as shown in FIG. 5. The middle cylinder 54 is the main anode electrode electrically connected to the power supply, and the middle cylinder 54 is made of conductive metal material, such as stainless steel or other metal material coated with platinum. The outer cylinder 52, the middle cylinder 54 and the inner cylinder 56 are all configured in the form of a hollow cylindrical structure. In addition, the inner edge of the outer cylinder 52 comprises a plurality of tooth structures (such as not less than 40 teeth), the outer and inner edges of the middle cylinder 54 comprise a plurality of tooth structures (such as not less than 40 teeth), the outer edge of the inner cylinder 56 comprises a plurality of tooth structures (such as not less than 40 teeth), wherein the teeth correspond to each other, thereby increasing area for carrying out the electrolysis.

According to the above embodiments, as the gas mixture of hydrogen and oxygen from the electrolytic tank is transferred into the first tank through the gas inlet mounted on the bottom portion of the first tank. This allows the gas mixture to pass through the pure water in the first tank, thus reducing the temperature of the gas mixture and preventing hydrogen explosion. Another mechanism for preventing hydrogen explosion is to keep the stored amount of the gas mixture at a safe value. In the present invention, the first level detector, the pressure relief valve and the replenishment from the second tank all help to achieve this. Furthermore, the first liquid inlet and the first gas outlet of the electrolytic tank, as well as the gas inlet and the first liquid outlet of the first tank, allow the pure water in the first tank can be replenished, and the gas mixture in the electrolytic tank can then automatically be imported into the first tank, thus, achieving the goal of cycling liquid/gas.

With the examples and explanations mentioned above, the features and spirits of the invention are hopefully well described. Importantly, the present invention is not limited to the embodiments described herein. Those skilled in the art will readily observe that numerous modifications and alterations of the device may be made while retaining the teachings of the invention. Accordingly, the above disclosure should be construed as limited only by the metes and bounds of the appended claims.

A liquid/gas cycling system utilized in water electrolysis to generate a gas mixture of hydrogen and oxygen is disclosed. The liquid/gas cycling system comprises an electrolytic tank having a first liquid inlet and a first gas outlet which is mounted on the upper portion of the electrolytic tank, wherein the electrolytic tank is adapted to contain water (for example, electrolytic water) and generate the gas mixture through water electrolysis. A first tank adapted to contain water has a gas inlet, a first liquid outlet, a second gas outlet and a pressure relief valve. The gas inlet is mounted on the bottom portion of the first tank and connected to the first gas outlet. The first liquid outlet is connected to the first liquid inlet. The second gas outlet and the pressure relief valve are mounted on the upper portion of the first tank. When the pressure of the gas mixture in the first tank exceeds a predetermined value, the pressure relief valve will release the gas mixture.

## Claims

1. A liquid/gas cycling system utilized in water electrolysis to generate a gas mixture of hydrogen and oxygen, comprising:
an electrolytic tank having a first liquid inlet and a first gas outlet mounted on the electrolytic tank, used to contain water and generate the gas mixture of hydrogen and oxygen through electrolysis of the water; and
a first tank for contain another water, comprising:
a gas inlet amounted on the first tank and connected to the first gas outlet of the electrolytic tank;
a first liquid outlet connected to the first liquid inlet of the electrolytic tank;
a second gas outlet mounted on the first tank and used to output the gas mixture of hydrogen and oxygen; and
a pressure relief valve mounted on the first tank, wherein the pressure relief valve selectively release the gas mixture in the first tank.

2. The liquid/gas cycling system of claim 1, wherein the gas inlet is mounted on an outer wall of a lower portion of the first tank.

3. The liquid/gas cycling system of claim 2, wherein the flow rate of the gas mixture of hydrogen and oxygen in the second gas outlet is between 0.1L/min and 2L/min.

4. The liquid/gas cycling system of claim 2, wherein the first tank has a bottom located higher than a bottom of the electrolytic tank.

5. The liquid/gas cycling system of claim 1, wherein the first tank further comprises:
a first level detector for detecting the level of the another water in the first tank; and
a first water inlet for replenishing the another water in the first tank.

6. The liquid/gas cycling system of claim 5, wherein the first level detector selectively opens the pressure relief valve to release the gas mixture in the first tank.

7. The liquid/gas cycling system of claim 1, further comprising:
a second tank having a second liquid outlet, used to contain another water;
wherein the first tank further comprises a second liquid inlet connected to the second liquid outlet.

8. The liquid/gas cycling system of claim 7, wherein the second liquid outlet is mounted on a lower portion of the second tank, and the second liquid inlet is mounted on a upper portion of the first tank.

9. The liquid/gas cycling system of claim 8, wherein the second tank has a bottom located higher than a bottom of the first tank.

10. The liquid/gas cycling system of claim 7, further comprising:
a liquid valve mounted between the second liquid inlet and the second liquid outlet;
wherein, the first tank further comprises a first level detector detecting the level of the another water in the first tank and selectively openning the liquid valve to replenish the another water in the first tank.

11. The liquid/gas cycling system of claim 10, wherein the first level detector further selectively open the pressure relief valve to release the gas mixture in the first tank.

12. The liquid/gas cycling system of claim 11, wherein the liquid valve and the pressure relief valve are opened simultaneously.

13. The liquid/gas cycling system of claim 7, wherein the second tank further comprises:
a second level detector for detecting the level of the another water in the second tank; and
a second water inlet for replenishing the another water in the second tank.

14. The liquid/gas cycling system of claim 1, wherein the electrolytic tank further comprises a bimodal electrolyzer comprising an outer cylinder, a middle cylinder located within the outer cylinder and an inner cylinder located within the middle cylinder, wherein the middle cylinder is electrically connected to a power supply.

15. The liquid/gas cycling system of claim 14, wherein the middle cylinder has outer and inner edges provided with a plurality of tooth structures.

16. The liquid/gas cycling system of claim 15, wherein the outer cylinder has an inner edge provided with a plurality of tooth structures, and the inner cylinder has an outer edge provided with a plurality of tooth structures.

17. The liquid/gas cycling system of claim 1, wherein the electrolytic tank further comprises a first electrode and a second electrode, and the first electrode and the second electrode has interchangeable polarity.
